# EUROPÄISCHE PATENTSCHRIFT

(11) **EP 3 205 917 B1**
(45) Veröffentlichungstag und Bekanntmachung des Hinweises auf die Patenterteilung: **01.08.2018**
(21) Anmeldenummer: 16155562.8
(22) Anmeldetag: 12.02.2016
(51) Int. Cl.: F16L 3/10, F16L 3/205

(54) **VORRICHTUNG ZUR BEFESTIGUNG VON ROHREN ODER SCHLÄUCHEN**
DEVICE FOR FIXING PIPES AND HOSES
DISPOSITIF DE FIXATION DE TUBES OU DE TUYAUX

(43) Veröffentlichungstag der Anmeldung: 16.08.2017
(73) Patentinhaber: WALTER STAUFFENBERG GMBH & CO. KG, 58791 Werdohl (DE)
(72) Erfinder: König, Ulrich Stefan, 58849 Herscheid (DE)
(74) Vertreter: Patentanwälte Dörner & Kötter PartG mbB

(56) Entgegenhaltungen:
- EP-A1- 2 913 574
- EP-A2- 0 702 181
- US-A1- 2005 072 883

## Beschreibung

Die Erfindung betrifft eine Vorrichtung zur Befestigung von Bauteilen, insbesondere Rohren oder Schläuchen nach dem Oberbegriff des Patentanspruchs 1.

Zur Befestigung von Rohren und Schläuchen werden regelmäßig so genannte Schellen eingesetzt, die regelmäßig einen Schellenkörper umfassen, der aus einem thermoplastischen oder elastomeren Kunststoff oder auch aus Metall hergestellt ist. Der Schellenkörper ist dabei häufig aus zwei miteinander verbindbaren Befestigungsteilen gebildet, die in montiertem Zustand eine Durchführung zur Aufnahme des Rohres, bzw. des Schlauches bilden. Das zu befestigende Bauteil wird dabei im Wesentlichen kraftschlüssig innerhalb der beiden Schellenkörper festgelegt. Befestigungsvorrichtungen für Rohre sind in der EP 0 626 533 A1 sowie in der EP 0 702 181 A2 offenbart.

Insbesondere beim Einsatz solcher Schellen in korrosionsfördernden Umgebungen, beispielsweise zur Befestigung von hydraulischen Leitungen im Offshore-Bereich kann es, auch beim Einsatz von Kunststoffschellen, die zur Fixierung von Edelstahlleitungen eingesetzt sind, zu Korrosionen an den festzulegenden Leitungen kommen, die durch Umgebungseinflüsse, wie salzhaltige Luft oder dergleichen bedingt sind. So ist regelmäßig eine Spaltkorrosion an Metallteilen bei Vorhandensein eines korrosiven Mediums in nicht abgeschlossenen Auflagespaltungen festzustellen, die beispielsweise durch Überlappung, aufgesetzte Stege oder nicht durchgeschweißte Verbindungsstellen gebildet sind. Ursächlich für die Spaltkorrosion ist dabei der Konzentrationsunterschied zwischen dem eigentlichen Spalt und der den Spalt umgebenden Umgebung des korrosiven Mediums. Hierdurch ist eine Potenzialdifferenz bewirkt, die zu elektrochemischer Korrosion innerhalb des Spaltes oder im Bereich der Umgebung des Spaltes führt. Sogar bei nicht rostenden Chrom-Nickel-Teilen kann es in Spalten zur Korrosion kommen, wenn kein Sauerstoff zur Ausbildung einer schützenden Oxidschicht vorhanden ist.

Zur Lösung dieser Problematik wird in der DE 10 2010 026 596 A1 vorgeschlagen, zumindest einen Schellenteil mit einem Opferelement zu versehen, das mit Einsetzen der Korrosion und fortschreitender Einsatzdauer der Schellenbefestigung sich zusehends verbraucht. Dabei wird das jeweilige Opferelement als eigenständiges Bauteil auf die Außenkontur des zuordenbaren Schellenteils aufgesetzt. Das Opferelement bildet so eine in ihrer Wandstärke gleichbleibende Halbschale mit halbkreisförmigen Querschnitt für das Schellenteil aus. Bei der Befestigung von Rohren werden diese zwischen den beiden Schellen eingespannt, wodurch die Opferelemente an das Rohr angepresst werden.

Bei der vorgeschlagenen Schelle hat sich jedoch als nachteilig erwiesen, dass sich das Opferelement bei fortschreitender Einsatzdauer verbraucht, wodurch die kraftschlüssige Verbindung zwischen Schelle und Rohrleitung gelockert wird. Hierdurch ist zum einen die Befestigung der Rohrleitung beeinträchtigt; zum anderen kann es zu Kontaktabrissen zwischen Opferelement und Rohrleitung kommen, wodurch die antikorrosive Wirkung beeinträchtigt ist.

Hier will die Erfindung Abhilfe schaffen. Der Erfindung liegt die Aufgabe zu Grunde, eine Vorrichtung zur Befestigung von Bauteilen, insbesondere Rohren oder Schläuchen bereitzustellen, bei der auch bei fortschreitender Einsatzdauer einer Spaltkorrosion entgegengewirkt ist und die kraftschlüssige Befestigung der Rohre bzw. Schläuche gewährleistet ist. Gemäß der Erfindung wird diese Aufgabe durch die Merkmale des kennzeichnenden Teils des Patentanspruchs 1 gelöst.

Mit der Erfindung ist eine Vorrichtung zur Befestigung von Bauteilen, insbesondere Rohren oder Schläuchen bereitgestellt, die Spaltkorrosionen zwischen ihr und dem aufzunehmenden Rohr bzw. Schlauch bei gleichzeitiger Gewährleistung der kraftschlüssigen Befestigung verhindert ist. Dadurch, dass wenigstens ein Befestigungsteil wenigstens eine Ausnehmung aufweist, die seitlich in der Durchführung mündet und in der wenigstens ein Opferelement beweglich angeordnet ist, das über ein Federelement in Richtung der Durchführung vorgespannt ist, ist auch mit zunehmendem Verbrauch des Opferelements ein kontinuierlicher Kraftschluss zwischen der Vorrichtung und dem aufgenommenen Bauteil gewährleistet. Über das Federelement ist darüber hinaus sichergestellt, dass auch bei zunehmendem Verbrauch des Opferelements dieses unter stetigem Andruck an das Bauteil gehalten wird.

Erfindungswesentlich an dieser Stelle ist die Entkopplung von der den Kraftschluss bewirkenden Klemmkraft einerseits und der Andrückkraft des Opferelements an das aufgenommenen Bauteil andererseits. Auf diese Weise hat ein fortschreitender Verbrauch des Opferelements keinerlei Einwirkung auf die kraftschlüssige Fixierung des Bauteils innerhalb der Vorrichtung.

Unter dem Begriff "Durchführung" ist vorliegend die zwischen den Befestigungsteilen gebildete Kontur zu verstehen, die an einem befestigten Bauteil, insbesondere einem Rohr oder Schlauch, anliegt. Dabei kann die Durchführung auch durch wenigstens zwei an den Befestigungsteilen beabstandet zueinander angeordnete Rippenpaaren gebildet sein. Im Falle einer Vorrichtung zur Befestigung eines kreisrunden Rohres wäre die Durchführung der Bereich eines durch die beiden Rippenpaare hindurchgeführten gedachten Hohlzylinders, dessen Radius durch die Kontur der Anlagefläche der Rippen für das aufzunehmende Rohr definiert ist.

Unter dem Begriff "Ausnehmung" ist vorliegend jedweder zur Aufnahme eines Opferelementes geeignete, zwischen die Klemmkraft auf das zu befestigende Bauteil übertragende Anlageflächen der Befestigungsteile angeordnete Raum zu subsummieren. Eine "Ausnehmung" kann beispielsweise auch durch den Zwischenraum zweier beabstandet zueinander angeordneter Rippen eines Befestigungsteils gebildet sein.

In Weiterbildung der Erfindung umfasst das Federelement ein Gummi- oder Elastomerelement. Hierdurch ist eine kostengünstige und zugleich zuverlässige Vorspannkraft auf das Opferelement erzielbar. Alternativ oder zusätzlich kann das Federelement auch eine Schrauben- oder Biegefeder umfassen.

In Ausgestaltung der Erfindung ist die Durchführung durch Konturen von zwei oder mehreren Rippenpaaren der Befestigungsteile gebildet, die der Aufnahme des Bauteils dienen. Hierdurch ist eine materialreduzierte Herstellung ermöglicht.

In weiterer Ausgestaltung der Erfindung ist wenigstens eine ein Opferelement aufnehmende Ausnehmung zwischen zwei Rippen eines Befestigungsteils gebildet. Hierdurch ist eine vereinfachte Konstruktion erzielt.

In Weiterbildung der Erfindung ist wenigstens ein Opferelement mit wenigstens einem Anzeigemittel zur optischen Anzeige des Verschleißes des Opferelementes verbunden. Hierdurch ist die Wartung der Vorrichtung in Bezug auf einen erforderlichen Wechsel des Opferelementes vereinfacht.

In Ausgestaltung der Erfindung umfasst das Anzeigemittel wenigstens einen seitlich hervorstehenden Arm, der in eine von außen einsehbare Führung eines Befestigungsteils eingreift. Hierdurch ist eine Lageänderung des Opferelementes über die Lageänderung des in der Führung eingreifenden Arms erkennbar.

In weiterer Ausgestaltung der Erfindung ist wenigstens ein Arm durch eine Rastnase gebildet, die derart in der Führung eingerastet ist, dass sie in der Führung verschiebbar, jedoch unverlierbar gehalten ist. Hierdurch ist ein ungewolltes Hinausgleiten des Opferelementes aus der Führung durch die von dem Federelement indizierte Vorspannung verhindert.

In Weiterbildung der Erfindung sind die Befestigungsteile identisch ausgebildet. Hierdurch sind die Herstellkosten reduziert sowie eine Lagerhaltung minimiert.

In Ausgestaltung der Erfindung ist das Opferelement aus einem unedlerem Material als das aufzunehmende Bauteil, insbesondere aus Zink und/oder Magnesium hergestellt. Hierdurch ist eine gute Antikorrosionswirkung erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Befestigungsteils einer Vorrichtung zur Befestigung einer Rohrleitung
a) in der Draufsicht;
b) in der Seitenansicht;
c) in der Ansicht von unten;
- Figur 2: die Detaildarstellung der Verschleißanzeige des Befestigungsteils aus Figur 1;

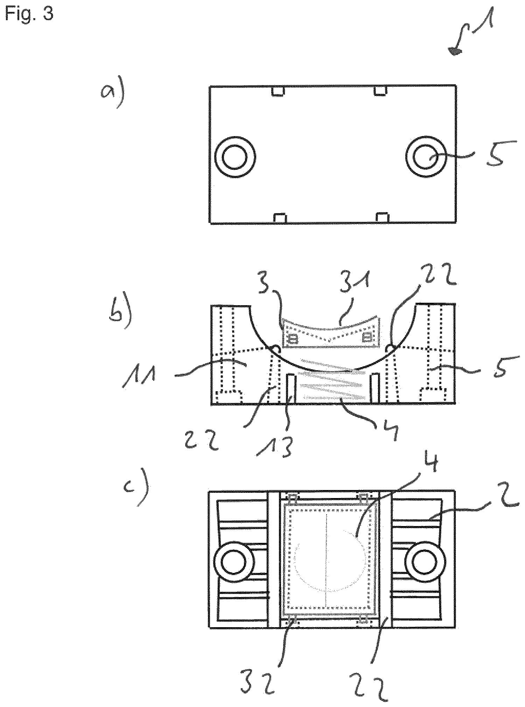

- Figur 3: die schematische Darstellung eines Befestigungsteils einer Vorrichtung zur Befestigung einer Rohrleitung in einer weiteren Ausfürhungsform
a) in der Draufsicht;
b) in der Seitenansicht;
c) in der Ansicht von unten.

Die als Ausführungsbeispiel gewählte Vorrichtung zur Befestigung eines Rohres ist als blockförmige Rohrschelle ausgebildet, welche aus zwei identisch gestalteten Rohrschellenhälften 1 zusammengesetzt ist. Die Rohrschellenhälften 1 sind im Ausführungsbeispiel aus Polypropylen (PP) hergestellt und weisen einen im Wesentlichen hohlquaderförmig ausgebildeten Grundkörper auf, in dessen Querseitenwänden 11 jeweils ein halbkreisförmiger Ausschnitt 12 eingeformt ist. Zwischen den Querseitenwänden 11 sind parallel beabstandet zueinander Rippen 12 angeordnet. Die Rippen 2 durchbrechend ist in der Rohrschellenhälfte 1 eine quaderförmige Ausnehmung 21 zur Aufnahme eines Opferelementes 3 eingebracht. Die Ausnehmung 21 ist durch angeformte Seitenstege 22 begrenzt, welche zwischen den Querseitenwänden 11 verlaufend angeordnet sind. Im Bereich der Ausnehmung 21 sind in die Querseitenwände 11 jeweils zwei parallel zueinander angeordnete, vertikal verlaufende Führungsschlitze 13 eingebracht. Weiterhin sind in den Rohrschellenhälften 1 zu beiden Seiten der Ausschnitte 12 gegenüberliegend zwei Bohrungen 5 eingebracht. Die Bohrungen 5 dienen der Durchführung von Schrauben zur Verspannung der beiden Rohrschellenhälften 1 gegen ein zwischen den Ausschnitten 12 anzuordnendes - nicht dargestelltes - Rohr.

Von der Ausnehmung 21 ist ein Opferelement 3 aufgenommen. Das Opferlement 3 ist im Wesentlichen quaderförmig ausgebildet, wobei die dem aufzunehmenden Rohr zugewandte Deckfläche des Opferelementes 3 mit einer dem aufzunehmenden Rohr entsprechenden Kontur 31 versehen ist. An seinem den Querseitenwänden 11 zugewandten Seiten sind an dem Opferelement 3 jeweils zwei beabstandet zueinander angeordnete Rastnasen 32 angeformt. Die Rastnasen 32 sind an ihrer dem Boden 14 der Rohrschellenhälfte 1 zugewandten Unterseite mit einer Schräge 33 versehen, die mit einer oberhalb der Führungsschlitze 13 jeweils eingeformten Schräge 15 korrespondiert. Beim Einbringen des Opferelementes 3 in die Ausnehmung 21 werden durch das Zusammenwirken der Schrägen 33, 15 die elastischen Querseitenwände 11 nach außen bewegt, bis die Rastnasen 32 in die Führungsschlitze 13 eingreifen, wonach die Querseitenwände 11 wieder ihre Ursprungsposition einnehmen. Hiernach ist das Opferlement 3 über die Rastnasen 32 in den Führungsschlitzen 13 vertikal verschiebbar, jedoch unverlierbar gehalten. Zischen dem Boden 14 der Rohrschellenhälfte 1 und dem Opferlement 3 ist eine Druckfeder 4 angeordnet, über welche das Opferlement 3 entgegen den Boden 14 vorgespannt ist. Die Rastnasen 32 des Opferelementes 3 sind so gegen die oberen Begrenzungen der Führungsschlitze 13 angelegt.

Zur Befestigung eines Rohres wird dieses in die Ausschnitte 12 der Seitenwände 11 einer Rohrschellenhälfte 1 eingelegt, wodurch das Opferlement 3 entgegen der Vorspannkraft der Druckfeder 4 in Richtung des Bodens 14 bewegt wird. Die Rastnasen 32 des Opferlementes 3 gleiten hierbei innerhalb der Führungsschlitze 13 in Richtung des Bodens 14. Eine identisch ausgebildete weitere Rohrschellenhälfte 1 wird nun auf die erste Rohrschellenhälfte 1 derart aufgebracht, dass der Ausschnitt 12 der Seitenwände 11 auf dem - nicht dargestellten - Rohr aufliegt. Die Ausschnitte 12 der Seitenwände 11 der beiden Rohrschellenhälften 1 bilden somit die Durchführung für das Rohr. Nachfolgend werden die Rohrschellenhälften 1 über eine durch die Bohrungen 5 geführte - nicht dargestellte - Schraube gegeneinander verspannt, wodurch das - nicht dargestellte - Rohr zwischen den mit Ausschnitten 12 versehenen Seitenwänden 11 eingeklemmt wird. Unabhängig von der über die Seitenwände 11 übertragenden Klemmkräfte werden die Opferelemente 3 über die Rückstellkräfte der Druckfedern 4 gegen das aufgenommene Rohr gedrückt, wodurch ein Korrosionsschutz erzielt ist. Bei zunehmendem Verbrauch der Opferlemente 3 über die Zeit werden diese über die Druckfedern 4 nachgeführt, wodurch die in den Führungsschlitzen 13 angeordneten Rastnasen 32 auf das Rohr zubewegt werden. Über die Position der Rastnasen 32 in den Führungsschlitzen 13, die von außen sichtbar ist, lässt sich so der Verbrauchszustand der Opferlemente 3 ablesen.

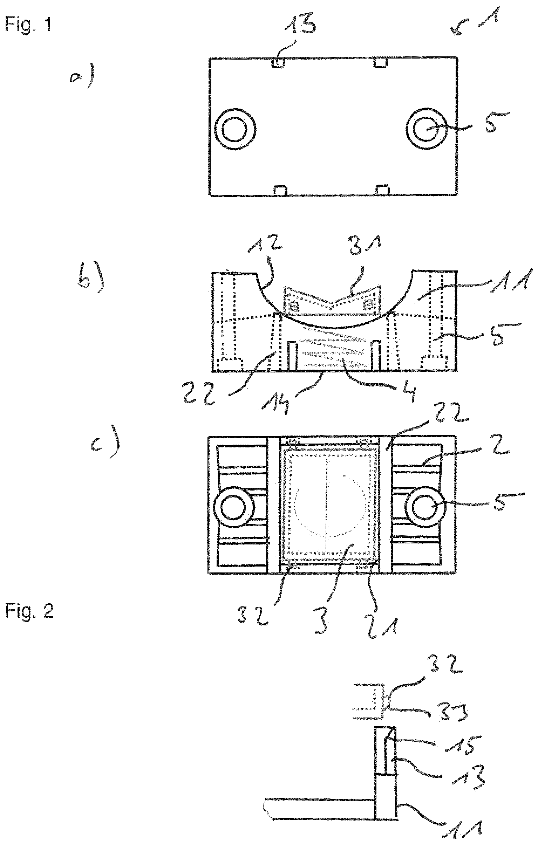

Im Ausführungsbeispiel gemäß Figur 2 sind die Seitenstege 22 als Halterippen ausgebildet, welche in den halbkreisförmigen Ausschnitt 12 der Querseitenwände 11 der Rohrschellenhälfte 1 hineinragen. Dabei ist die Durchführung der durch die beiden Rohrschellenhälften 1 gebildeten Befestigungsvorrichtung durch die hervorstehenden Seitenstege 22 begrenzt, durch die nach Verspannung der beiden Rohrschellenhälften 1 gegeneinander die Klemmkräfte auf das aufzunehmende - nicht dargestellte - Rohr übertragen werden. Alternativ können die Seitenstege 22 auch exakt mit den Ausschnitten 12 der Querseitenwände 11 der beiden Rohrschellenhälften 1 fluchten, wodurch die Klemmkräfte sowohl über die durch die Ausschnitte 12 gebildeten Konturen der Querseitenwände 11, als auch über die Seitenstege 22 auf ein aufzunehmendes Rohr übertragen werden.

## Patentansprüche

1. Vorrichtung zur Befestigung von Bauteilen, insbesondere Rohren oder Schläuchen, umfassend zwei miteinander verbindbare Befestigungsteile (1) mit Ausnehmungen, welche im montierten Zustand eine Durchführung bilden, dessen Innenkontur zur Aufnahme eines Rohres oder Schlauches ausgebildet ist, wobei wenigstens ein Opferelement (3) zur Minimierung der Korrosion, insbesondere Spaltkorrosion bei einem jeweils aufgenommenen Bauteil angeordnet ist, das mit Einsetzen der Korrosion und fortschreitenden Einsatzdauer der Befestigung sich zusehends verbraucht, **dadurch gekennzeichnet, dass** wenigstens ein Befestigungsteil (1) wenigstens eine Ausnehmung (21) aufweist, die seitlich in der Durchführung mündet und in der wenigstens ein Opferelement (3) als eigenständiges Teil beweglich angeordnet ist, das über ein Federelement in Richtung der Durchführung vorgespannt ist.

2. Vorrichtung nach Anspruch 1, **dadurch gekennzeichnet, dass** das Federelement ein Gummi- oder Elastomerelement umfasst.

3. Vorrichtung nach Anspruch 1 oder 2, **dadurch gekennzeichnet, dass** das Federelement eine Schrauben- oder Biegefeder umfasst.

4. Vorrichtung nach einem der vorgenannten Ansprüche, **dadurch gekennzeichnet, dass** die Durchführung durch Konturen von zwei oder mehreren Rippenpaaren der Befestigungsteile (1) gebildet ist, die der Aufnahme des Bauteils dienen.

5. Vorrichtung nach einem der vorgenannten Ansprüche, **dadurch gekennzeichnet, dass** wenigstens ein Opferelement (3) mit wenigstens einem Anzeigemittel zur optischen Anzeige des Verschleißes des Opferelementes (3) verbunden ist.

6. Vorrichtung nach Anspruch 5, **dadurch gekennzeichnet, dass** das Anzeigemittel wenigstens einen seitlich hervorstehenden Arm umfasst, der in eine von außen einsehbare Führung eines Befestigungsteils (1) eingreift.

7. Vorrichtung nach Anspruch 6, **dadurch gekennzeichnet, dass** wenigstens ein Arm durch eine Rastnase (32) gebildet ist, die derart in der Führung eingerastet ist, dass sie in der Führung verschiebbar, jedoch unverlierbar gehalten ist.

8. Vorrichtung nach einem der vorgenannten Ansprüche, **dadurch gekennzeichnet, dass** die Befestigungsteile (1) identisch ausgebildet sind.

9. Vorrichtung nach einem der vorgenannten Ansprüche, **dadurch gekennzeichnet, dass** das Opferelement (3) aus einem unedleren Material als das aufzunehmende Bauteil, insbesondere aus Zink und/oder Magnesium hergestellt ist.

## Claims

1. Device for fixing components, particularly pipes or hoses, comprising two interconnectable fasteners (1) having recesses, which in the assembled state form a lead-through, the inner contour of which is designed for receiving a pipe or a hose, wherein at least one sacrificial member (3) is arranged at each component received to minimise corrosion, particularly crevice corrosion, which visibly wears itself down upon the onset of corrosion and advancing service life of the fixing, **characterised in that** at least one fastener (1) has at least one recess (21), which opens laterally into the lead-through and in which at least one sacrificial member (3) is movably arranged as a separate part, which is prestressed in the direction of the lead-through via a spring element.

2. Device according to claim 1, **characterised in that** the spring element comprises a rubber or elastomeric element.

3. Device according to claim 1 or 2, **characterised in that** the spring element comprises a coil spring or a spiral spring.

4. Device according to one of the previous claims, **characterised in that** the lead-through is formed by contours of two or several pairs of ribs of the fasteners (1), which serve the purpose of receiving the component.

5. Device according to one of the previous claims, **characterised in that** at least one sacrificial member (3) is connected to at least one display means for optically displaying the wear and tear of the sacrificial member (3).

6. Device according to claim 5, **characterised in that** the display means comprises at least one laterally projecting arm which engages in a guide of a fastener (1) which is visible from the outside.

7. Device according to claim 6, **characterised in that** at least one arm is formed by a latching lug (32), which is latched in the guide in a manner that it is movably yet undetachably held in the guide.

8. Device according to one of the previous claims, **characterised in that** the fasteners (1) are identically designed.

9. Device according to one of the previous claims, **characterised in that** the sacrificial member (3) is made of a material less noble than the component to be received, particularly of zinc and/or magnesium.

## Revendications

1. Dispositif de fixation de composants, notamment de tubes et de tuyaux, comprenant deux pièces de fixation (1) reliables entre elles et présentant des évidements qui forment à l'état monté un passage dont le contour intérieur est configuré pour recevoir un tube ou un tuyau, sachant qu'au moins un élément sacrifié (3) destiné à minimiser la corrosion, la corrosion interstitielle en particulier, est disposé contre au moins un composant respectivement reçu ; cet élément s'use visiblement au démarrage de la corrosion et pendant l'écoulement de la durée d'utilisation de la fixation, **caractérisé en ce qu'**au moins une pièce de fixation (1) présente au moins un évidement (21) qui aboutit latéralement dans le passage et dans lequel au moins un élément sacrifié (3) est disposé mobile comme pièce indépendante précontrainte via un élément ressort en direction du passage.

2. Dispositif selon la revendication 1, **caractérisé en ce que** l'élément ressort comprend un élément en caoutchouc ou en élastomère.

3. Dispositif selon la revendication 1 ou 2, **caractérisé en ce que** l'élément ressort comprend un ressort hélicoïdal ou flexible.

4. Dispositif selon l'une des revendications précédentes, **caractérisé en ce que** le passage est formé par les contours de deux ou plusieurs paires de nervures des pièces de fixation (1) qui servent de réceptacle au composant.

5. Dispositif selon l'une des revendications précédentes, **caractérisé en ce qu'** au moins un élément sacrifié (3) est relié à au moins un élément d'affichage pour afficher de façon visuelle l'usure de l'élément sacrifié (3).

6. Dispositif selon la revendication 5, **caractérisé en ce que** le moyen d'affichage comprend au moins un bras saillant latéral qui engrène dans un guidage, visible de l'extérieur, d'une pièce de fixation (1).

7. Dispositif selon la revendication 6, **caractérisé en ce qu'**au moins un bras est formé par une saillie de crantage (32) encrantée dans le guidage de sorte à pouvoir certes coulisser dans le guidage, mais à être retenue de manière imperdable.

8. Dispositif selon l'une des revendications précédentes, **caractérisé en ce que** les pièces de fixation (1) sont de configuration identique.

9. Dispositif selon l'une des revendications précédentes, **caractérisé en ce que** l'élément sacrifié (3) est en métal moins noble, notamment en zinc et/ou magnésium, que le composant qui le reçoit.
